# EUROPÄISCHE PATENTANMELDUNG

(11) **EP 4 053 534 A1**
(43) Veröffentlichungstag der Anmeldung: **07.09.2022**
(21) Anmeldenummer: 21160115.8
(22) Anmeldetag: 02.03.2021
(51) Int. Cl.: G01N 1/40, B03D 1/14, G01N 33/18, G01N 15/00, G01N 15/06, G01N 1/10, C02F 103/00

(54) **VERFAHREN UND WASSERFAHRZEUG ZUR LOKALISIERUNG VON BEREICHEN EINES GEWÄSSERS, DIE EINE ERHÖHTE PARTIKELKONZENTRATION AUFWEISEN**

(71) Anmelder: Damann, Volker, 33165 Lichtenau-Henglarn (DE); Damann, Roland, 33106 Paderborn (DE)
(72) Erfinder: DAMANN, Roland, 33106 Paderborn (DE)
(74) Vertreter: Hauck Patentanwaltspartnerschaft mbB

(57) **Zusammenfassung**

Verfahren zur Lokalisierung von Bereichen eines Gewässers, die eine erhöhte Partikelkonzentration aufweisen, mit den folgenden Schritten:
• Ansteuern einer definierten Position in dem Gewässer mit einem Wasserfahrzeug, das eine Einrichtung zum Bereitstellen von Druckwasser, eine mit der Einrichtung zum Bereitstellen von Druckwasser verbundene Druckwasserleitung mit einem Entspannungsventil und eine Kamera aufweist,
• Ausströmenlassen von Druckwasser durch das Entspannungsventil, während das Entspannungsventil unterhalb und in einem definierten Abstand von einer Wasseroberfläche angeordnet ist, so dass eine Vielzahl von Mikroblasen entstehen und an die Wasseroberfläche aufsteigen,
• Erfassen eines Bilds der Wasseroberfläche mit der Kamera,
• Ermitteln eines Kennwerts für die Partikelkonzentration auf Grundlage des mit der Kamera erfassten Bilds.

## Beschreibung

Die Erfindung betrifft ein Verfahren zur Lokalisierung von Bereichen eines Gewässers, die eine erhöhte Partikelkonzentration aufweisen.

In Anbetracht der erheblichen und fortschreitenden Verschmutzung der Meere und sonstigen Gewässer, insbesondere mit Mikroplastik, wird mit Hochdruck an Lösungen gearbeitet, mit denen die betreffenden Partikel wieder aus den Gewässern entfernt werden können. Beispielsweise schlägt die Druckschrift EP 3 647 272 A1 eine schwimmende Mikroflotationsanlage vor, bei der ein größerer Oberflächenbereich des Gewässers von einer schwimmfähigen Barriere eingeschlossen wird. Innerhalb der Barriere unter Wasser erzeugte Mikroblasen lagern sich an Partikel an und transportieren diese an der Oberfläche. Dort wird das entstandene Flotat mit einer Räumeinrichtung gesammelt und entsorgt. Auf diese Weise ist es grundsätzlich möglich, mit relativ geringem Energieeinsatz Gewässer von Partikeln zu befreien. Wegen der Größe der zu reinigenden Gewässer und der häufig ungleichmäßigen Verteilung der Partikel darin ist ein gezielter Einsatz der neuen Technologie jedoch schwierig. Es besteht die Gefahr, viel Zeit und Energie für die Reinigung eher gering belasteter Bereiche des Gewässers aufzuwenden.

Zur Messung einer Partikelkonzentration in Gewässern, insbesondere von Mikroplastikpartikeln, ist in der Regel erforderlich, Proben zu entnehmen und einer aufwändigen Laboruntersuchung zu unterziehen. In der Veröffentlichung *"*The vertical distribution and biological transport of marine microplastics across the epipelagic and mesopelagic water column" von C. Anela Choy et al., Scientific Reports (2019) 9:7843, ist beschrieben, in unterschiedlichen Wassertiefen einen Schwimmroboter einzusetzen. Während der Fahrt des Schwimmreporters durchströmt das Wasser eine Filtereinrichtung mit einem feinmaschigen Nylonsieb. Nach der Filtrierung einer bestimmten Wassermenge wird das Nylonsieb entnommen und die abfiltrierten Rückstände werden im Labor untersucht. Ebenfalls bekannt ist ein Einsatz von Schwimm- und Schleppnetzen. All diese Verfahren können zwar anhand spezieller Laboruntersuchungen, insbesondere einer Raman-Spektroskopie, genaue Erkenntnisse über die im Wasser enthaltenen Partikel liefern. Sie sind jedoch sehr zeitaufwändig und zur Erfassung einer sich schnell ändernden, aktuellen Situation kaum geeignet.

Davon ausgehend ist es die Aufgabe der Erfindung, ein Verfahren zur Lokalisierung von Bereichen eines Gewässers, die eine erhöhte Partikelkonzentration aufweisen, sowie ein hierfür einsetzbares Wasserfahrzeug anzugeben, die eine schnellere Bewertung der Partikelkonzentration und dadurch einen gezielten Einsatz von Reinigungsverfahren ermöglicht.

Diese Aufgabe wird gelöst durch das Verfahren mit den Merkmalen des Anspruchs 1 und durch das Wasserfahrzeug mit den Merkmalen des Anspruchs 10. Vorteilhafte Ausgestaltungen sind in den sich jeweils anschließenden Unteransprüchen angegeben.

Das Verfahren dient zur Lokalisierung von Bereichen eines Gewässers, die eine erhöhte Partikelkonzentration aufweisen, und weist die folgenden Schritte auf:
- Ansteuern einer definierten Position in dem Gewässer mit einem Wasserfahrzeug, das eine Einrichtung zum Bereitstellen von Druckwasser, eine mit der Einrichtung zum Bereitstellen von Druckwasser verbundene Druckwasserleitung mit einem Entspannungsventil und eine Kamera aufweist,
- Ausströmenlassen von Druckwasser durch das Entspannungsventil, während das Entspannungsventil unterhalb und in einem definierten Abstand von einer Wasseroberfläche angeordnet ist, so dass eine Vielzahl von Mikroblasen entstehen und an die Wasseroberfläche aufsteigen,
- Erfassen eines Bilds der Wasseroberfläche mit der Kamera,
- Ermitteln eines Kennwerts für die Partikelkonzentration auf Grundlage des mit der Kamera erfassten Bilds.

Das Gewässer kann ein natürliches Gewässer sein, beispielsweise ein Meer, ein Fluss oder ein See. Es kann sich jedoch auch um ein größeren, künstlichen Wasserkörper handeln, beispielsweise um eine Regenrückhaltebecken oder ein Hafenbecken. Bereiche eines Gewässers, die eine erhöhte Partikelkonzentration aufweisen, werden im Fall einer Verunreinigung mit Mikroplastik häufig als "Mikroplastik-Hotspots" bezeichnet. Sie entstehen durch einen ungleichmäßigen Eintrag des Mikroplastiks in das Gewässer in Verbindung mit Strömungen und Temperaturunterschieden. Eine genaue Vorhersage, in welchen Bereichen eines Gewässers sich solche Hotspots ausbilden, ist in der Praxis nicht möglich.

Bei dem Verfahren wird eine Mikroflotation durchgeführt. Hierzu hat das Wasserfahrzeug eine Einrichtung zum Bereitstellen von Druckwasser. Druckwasser ist Wasser, in dem unter erhöhtem Druck ein Gas, insbesondere Luft, gelöst ist. Bevorzugt wird das Druckwasser an Bord des Wasserfahrzeugs erzeugt, insbesondere in einem Reaktorbehälter, dem unter erhöhtem Druck Wasser und Luft zugeführt werden, beispielsweise mit einer Pumpe und einem Kompressor. In diesem Fall kann der Reaktorbehälter mit der Druckwasserleitung verbunden sein.

Die Druckwasserleitung weist ein Entspannungsventil auf, bevorzugt an einem freien Ende. Lässt man das Druckwasser durch die Druckwasserleitung über das Entspannungsventil ausströmen, beispielsweise durch Öffnen des Entspannungsventils oder eines diesem vorgelagerten Steuerventils, kommt es am Entspannungsventil zu einer Druckentspannung und es bildet sich eine Vielzahl kleiner und kleinster Luftblasen, idealerweise Mikroblasen mit einem Durchmesser in der Größenordnung von 50 µm. Die Mikroblasen steigen zur Wasseroberfläche auf und lagern sich dabei an Partikel an, die sich zwischen Entspannungsventil und Wasseroberfläche befinden. Diese Partikel werden dadurch an die Wasseroberfläche gefördert.

Anhand eines mit einer Kamera erfassten Bilds der Wasseroberfläche, das insbesondere die dorthin beförderten Partikel zeigt, wird ein Kennwert für die Partikelkonzentration ermittelt. Hierfür können zahlreiche Parameter des erfassten Bilds ausgewertet werden, beispielsweise ein Bedeckungsgrad des Oberflächenbereichs und/oder eine Struktur der Flotatschicht. Der auf diese Weise ermittelte Kennwert gibt Aufschluss über die Partikelkonzentration in dem mit der Mikroflotation behandelten Bereich. Es kann sich um eine quantitative Angabe handeln, die auf Grundlage des erfassten Bilds ermittelt wird, und/oder um einen Schätzwert, der im einfachsten Fall in der Information "erhöhte Partikelkonzentration liegt vor/liegt nicht vor" bestehen kann.

Anders als bei der Reinigung eines Gewässers von Partikeln mittels einer Mikroflotationsanlage kommt es bei dem erfindungsgemäßen Verfahren weniger auf die Effizienz der Mikroflotation als auf deren Schnelligkeit an. Es kann daher zugunsten schnellerer Ergebnisse eine größere Anzahl von Mikroblasen freigesetzt werden, als für eine effiziente Mikroflotation notwendig. Außerdem kann das Ausströmenlassen des Druckwassers auf einen relativ kurzen, vorgegebenen Zeitraum, beispielsweise im Bereich von 10 Sekunden bis 10 Minuten, beschränkt werden. Das Erfassen des Bilds mit der Kamera kann während der Mikroflotation erfolgen oder im Anschluss, insbesondere unmittelbar nach dem Beenden des Ausströmenlassens des Druckwassers oder in einem vorgegebenen zeitlichen Abstand davon. Je nach den Gegebenheiten kann auf diese Weise ein besonders aussagekräftiges Bild erfasst werden, das weniger von den aufsteigenden Mikroblasen selbst als von den bereits an die Oberfläche geförderten Partikeln geprägt ist.

Obwohl das Wasserfahrzeug die wesentlichen Elemente einer Mikroflotationsanlage aufweist, handelt es sich nicht um eine vollwertige Mikroflotationsanlage, mit der größere Gewässerbereiche effektiv gereinigt werden könnten. Stattdessen ist der Mikroflotationsprozess auf einen sehr kleinen Bereich des Gewässers, der eher den Charakter einer Wasserprobe hat, beschränkt, und die Einrichtung zum Bereitstellen von Druckwasser liefert lediglich daran angepasste Druckwassermengen. Es handelt sich demnach um eine miniaturisierte Mikroflotationsanlage. Der völlig andere Einsatzzweck kann auch darin zum Ausdruck kommen, dass das Wasserfahrzeug nicht dazu ausgebildet ist, die abflotierten Partikel eines Untersuchungsvorgangs oder mehrere Untersuchungsvorgänge zu sammeln und/oder zu entsorgen.

Der letzte Schritt des Verfahrens, das Ermitteln eines Kennwerts für die Partikelkonzentration auf Grundlage des mit der Kamera erfassten Bilds, kann mit einem geeigneten Rechner gleich an Ort und Stelle, also an Bord des Wasserfahrzeugs, ausgeführt werden. Alternativ ist es möglich, das erfasste Bild insbesondere per Funk an einen externen Rechner zu übertragen, der den Kennwert ermittelt.

Die besonderen Vorteile des Verfahrens bestehen darin, dass es einfach und schnell ausführbar ist und zu aussagekräftigen Ergebnissen über die Partikelkonzentration führt. Dadurch ist es möglich, schnell diejenigen Bereiche eines Gewässers zu identifizieren, an denen eine nachfolgende Reinigung den größten Nutzen bietet. Gegenüber den zum Stand der Technik skizzierten Lösungen ist das erfindungsgemäße Verfahren auch deshalb weniger aufwändig, weil es teilweise oder vollständig automatisiert ablaufen kann.

Speziell bei einer Verschmutzung mit Mikroplastik besteht ein besonderer Vorteil des Verfahrens darin, dass Mikroplastikpartikel hydrophob sind, so dass sich die Gasblasen an diese besonders gut anlagern. Neben der geringen Geschwindigkeit haben die skizzierten Filtrationsverfahren nämlich den Nachteil, dass jegliche Partikel, die aufgrund ihrer Größe in dem Filter hängenbleiben, erfasst werden, völlig unabhängig von ihren sonstigen Eigenschaften. Befinden sich viele organische Schwebstoffe im Wasser, besteht das abfiltrierte Material häufig nur zu einem geringen Anteil aus Mikroplastik. Ohne genaue Laboranalyse ist allein die Menge des abfiltrierten Materials wenig aussagekräftig. Bei der Erfindung werden hingegen Mikroplastikpartikel besonders wirksam abgeschieden, sodass die sich bildende Flotatschicht in vielen Fällen zu einem größeren Anteil aus Mikroplastik besteht. Durch die vorgesehene Erfassung und Auswertung eines Bilds der Wasseroberfläche ist eine weitere Erhöhung der Sensitivität speziell auf Mikroplastik möglich.

In einer Ausgestaltung beträgt der definierte Abstand 50 cm oder weniger. Wahlweise kann der Abstand auch noch geringer gewählt werden, beispielsweise 30 cm oder weniger oder sogar 20 cm oder weniger. In allen Fällen wird die mit dem Verfahren auf die Partikel untersuchte Wassermenge gering gehalten und die Zeit, die das Aufsteigen der Mikroblasen bis an die Oberfläche erfordert, ist gering. Somit wird der Zeitaufwand weiter verringert.

In einer Ausgestaltung weist das Verfahren den weiteren Schritt auf:
- Transportieren einer Wasserprobe aus einer vorgegebenen Wassertiefe des Gewässers in einen Bereich oberhalb des Entspannungsventils.

Dieser Schritt kann vor dem Ausströmenlassen oder während des Ausströmenlassens des Druckwassers ausgeführt werden. In beiden Fällen ist es möglich, die von der Mikroflotation erfasste Wassermenge aus einer bestimmten Tiefe zu entnehmen und dadurch gezielt Aufschluss über die Partikelkonzentration in dieser Wassertiefe erhalten. Um die Wasserprobe zu transportieren, kann insbesondere eine Pumpe mit einem Schlauch oder einer Rohrleitung verwendet werden. Alternativ ist ein Transport der Wasserprobe beispielsweise mit einer Schaufeleinrichtung möglich.

In einer Ausgestaltung weist das Wasserfahrzeug ein Becken auf, in dem das Entspannungsventil angeordnet ist, wobei die Wasserprobe in das Becken transportiert wird. Das Fassungsvermögen des Beckens kann beispielsweise 5001 oder weniger betragen. Das Becken kann an Bord des Wasserfahrzeugs sein, alternativ kann es beispielsweise seitlich an dem Wasserfahrzeug befestigt sein und/oder seinerseits schwimmend auf oder in dem Gewässer angeordnet sein. Das Entspannungsventil kann insbesondere an einem Boden des Beckens angeordnet sein. Grundsätzlich kann das Verfahren auch ohne ein Becken ausgeführt werden, indem die Mikroflotation in einem freien Bereich des Gewässers oder in einem nur teilweise eingegrenzten Bereich des Gewässers (beispielsweise mit einer schwimmenden oder an dem Wasserfahrzeug befestigten, ringförmigen Barriere) ausgeführt wird. Wird zuvor eine Wasserprobe in ein Becken transportiert und die Mikroflotation darin ausgeführt, können in der Regel konsistentere Ergebnisse erzielt werden. Hierfür gibt es zwei Gründe. Zum einen wird der Mikroflotationsprozess nicht durch Strömungen in dem Gewässer beeinflusst. Zum anderen vereinfacht sich die Erfassung der Wasseroberfläche mit der Kamera, da Einflüsse von auf dem Wasser treibenden Gegenständen verhindert und Einflüsse durch Strömungen und Wellenbewegungen des Gewässers reduziert werden. Insbesondere kann bei Verwendung eines Beckens die Menge des in das Becken transportierten Wassers stets konstant gehalten werden, sodass sich ein definierter Füllstand und eine stets gleiche Höhe der Wasseroberfläche einstellt. Die Erfassung des Bilds der Wasseroberfläche findet dann immer unter denselben Bedingungen statt.

In einer Ausgestaltung wird nach dem Ermitteln des Kennwerts der Kennwert gemeinsam mit der definierten Position gespeichert, insbesondere (alternativ oder zusätzlich) gemeinsam mit der Wassertiefe, aus der die Wasserprobe stammt. Es wird also für jede Messung ein Datensatz erstellt, der Aufschluss über die Partikelkonzentration in einem genau definierten Bereich des Gewässers gibt. Dies vereinfacht eine Kartierung der Partikelkonzentration des Gewässers.

In einer Ausgestaltung verbleibt nach dem Erfassen des Bilds das den Mikroblasen ausgesetzte Wasser einschließlich einer an der Wasseroberfläche gebildeten Flotatschicht in dem Gewässer bzw. wird aus dem Becken in das Gewässer zurückgeführt. Die Wasserprobe und das Flotat werden nach dem Erfassen des Bilds nicht mehr benötigt. Sie können daher verworfen werden. Befindet sich das den Mikroblasen ausgesetzte Wasser in einem Becken, kann dieses Zurückführen besonders einfach durch Auskippen des Beckens erfolgen.

In einer Ausgestaltung weist das Wasserfahrzeug einen Fahrantrieb und ein Navigationssystem auf, steuert autonom eine Reihe von vorgegebenen Positionen in dem Gewässer an und ermittelt für jede vorgegebenen Position mindestens einen Kennwert für die Partikelkonzentration. Wahlweise können für jede vorgegebene Position mehrere Kennwerte ermittelt werden, insbesondere für unterschiedliche Wassertiefen. Auf diese Weise kann die Partikelkonzentration eines Gewässers vollautomatisch kartiert werden.

In einer Ausgestaltung wird mit der Kamera ein Farbbild erfasst. Dadurch kann die Farbigkeit der Flotatschicht an der Wasseroberfläche bei der Ermittlung des Kennwerts berücksichtigt werden, insbesondere eine räumliche Verteilung unterschiedlieher Farben. Dies ermöglicht eine einfache und in vielen Fällen aussagekräftige Analyse der Zusammensetzung der Partikel, insbesondere für Mikroplastik.

In einer Ausgestaltung werden nach der Lokalisierung eines Bereichs eines Gewässers, der eine erhöhte Partikelkonzentration aufweist, die folgenden weiteren Schritte ausgeführt:
- Bewegen einer schwimmenden Mikroflotationsanlage zu dem Bereich und
- Betreiben der schwimmenden Mikroflotationsanlage zur Abscheidung und Entsorgung der Partikel.

An dieser Verfahrensführung wird deutlich, dass das erfindungsgemäße Verfahren der Lokalisierung der Partikel-Hotspots dient und dass die Partikel nachfolgend mit einer gesonderten Reinigungsanlage entfernt werden können. Hierfür kann insbesondere eine Mikroflotationsanlage sinnvoll eingesetzt werden.

Die oben angegebene Aufgabe wird ebenfalls gelöst durch das Wasserfahrzeug mit den Merkmalen des Anspruchs 10. Das Wasserfahrzeug dient zur Lokalisierung von Bereichen eines Gewässers, die eine erhöhte Partikelkonzentration aufweisen, und weist die folgenden Merkmale auf:
- eine Einrichtung zum Bereitstellen von Druckwasser,
- eine mit der Einrichtung zum Bereitstellen von Druckwasser verbundene Druckwasserleitung mit einem Entspannungsventil, das in einer definierten Wassertiefe unterhalb einer Wasseroberfläche angeordnet werden kann,
- eine Kamera und
- eine Steuerung, die dazu ausgebildet ist,
- die Einrichtung zum Bereitstellen von Druckwasser und/oder ein zugeordnetes Steuerventil so anzusteuern, dass Druckwasser durch das Entspannungsventil ausströmt, während das Entspannungsventil in einer definierten Wassertiefe unterhalb einer Wasseroberfläche angeordnet ist, so dass eine Vielzahl von Mikroblasen entstehen und an die Wasseroberfläche aufsteigen, und
- die Kamera so anzusteuern, dass sie ein Bild von der Wasseroberfläche oberhalb des Entspannungsventils erfasst,
- wobei eine Auswerteeinrichtung vorgesehen ist, die dazu ausgebildet ist, auf Grundlage des mit der Kamera erfassten Bilds einen Kennwert für die Partikelkonzentration zu ermitteln.

Das Wasserfahrzeug ist insbesondere zur Ausführung des erfindungsgemäßen Verfahrens bestimmt. Zu den Merkmalen und Vorteilen des Wasserfahrzeugs wird darum auf die vorangehenden Erläuterungen des Verfahrens verwiesen, die entsprechend gelten. Insbesondere kann das Wasserfahrzeug so ausgebildet sein, dass es eine, mehrere oder alle beschriebenen Ausgestaltungen des Verfahrens ausführen kann. Beispielsweise kann die Kamera eine Kamera sein, die ein Farbbild erfasst, das Wasserfahrzeug kann einen Fahrantrieb und ein Navigationssystem, beispielsweise mittels GPS, aufweisen und/oder es kann autonom fahren. Die Auswerteeinrichtung kann an Bord des Wasserfahrzeugs oder an einem externen Standort angeordnet sein.

In einer Ausgestaltung weist das Wasserfahrzeug eine Transporteinrichtung auf, mit der eine Wasserprobe aus einer vorgebbaren Wassertiefe in einen Bereich oberhalb des Entspannungsventils transportiert werden kann. Hierzu kann die Transporteinrichtung beispielsweise eine Pumpe und eine Rohrleitung und/oder einen Schlauch aufweisen. Alternativ kann die Transporteinrichtung eine Schaufel aufweisen, mit der Wasser aus der vorgebbaren Wassertiefe nach oben transportiert werden kann.

Der Bereich oberhalb des Entspannungsventils kann sich, wie im Zusammenhang mit dem Verfahren erläutert, in dem Gewässer selbst, in einem abgegrenzten Bereich des Gewässers oder in einem Becken, beispielsweise an Bord des Wasserfahrzeugs, befinden. Weist die Transporteinrichtung eine Rohrleitung und/oder einen Schlauch auf, kann ein Ende dieser Rohrleitung bzw. des Schlauchs unmittelbar benachbart zu dem Entspannungsventil angeordnet sein und/oder eine Auslassöffnung aufweisen, die so ausgerichtet ist, dass das transportierte Wasser etwa senkrecht nach oben ausströmt. Die Transporteinrichtung kann so ausgebildet sein, dass Wasser aus unterschiedlichen, vorgebbaren Wassertiefen entnommen und in den Bereich oberhalb des Entspannungsventils transportiert werden kann. Die vorgebbare Wassertiefe kann beispielsweise im Bereich zwischen 10 cm und 100 m liegen.

In einer Ausgestaltung weist die Transporteinrichtung ein Teleskoprohr auf, an dessen unterem Ende eine Ansaugöffnung angeordnet ist. Durch Aus- und Einfahren des Teleskoprohrs kann die Ansaugöffnung in der gewünschten Wassertiefe platziert werden. Auf diese Weise kann die Tiefe, aus der die Wasserprobe entnommen wird, selbst bei Anwesenheit erheblicher Strömungen einfach kontrolliert werden.

In einer Ausgestaltung ist in dem Teleskoprohr ein Schlauch geführt, der zu der Ansaugöffnung führt, wobei am oberen Ende des Teleskoprohrs eine Aufrolleinrichtung für den Schlauch angeordnet ist. Das der Ansaugöffnung entgegengesetzte Ende des Schlauchs führt in den Bereich oberhalb des Entspannungsventils, insbesondere in ein Becken, und weist dort eine Auslassöffnung auf oder ist mit einer Auslassöffnung verbunden. Durch die Verwendung eines Schlauchs kann auf eine Abdichtung des Teleskoprohrs verzichtet werden.

In einer Ausgestaltung weist das Wasserfahrzeug ein Becken auf, in dem das Entspannungsventil angeordnet ist. Wie im Zusammenhang mit dem Verfahren erläutert, kann sich das Becken an Bord des Wasserfahrzeugs oder auch im Wasser befinden. Das Becken kann beispielsweise ein Volumen von 500 l oder weniger, oder von 200 l oder weniger, aufweisen. Eine Höhe des Beckens, gemessen von einem Boden des Beckens bis zu einem oberen Beckenrand, kann beispielsweise 60 cm oder weniger betragen, bevorzugt 30 cm oder weniger. Es kann sich bei dem Becken um eine relativ flache Schale handeln.

In einer Ausgestaltung weist das Wasserfahrzeug eine Kippeinrichtung auf, mit der das Becken gekippt und eine in dem Becken aufgenommene Wasserprobe einschließlich einer an der Wasseroberfläche befindlichen Flotatschicht ausgekippt werden kann. Mit Hilfe der Kippeinrichtung ist eine besonders einfache, schnelle und vollständige Entleerung des Beckens möglich. Im Vergleich zu einer Entleerung des Beckens mittels einer Pumpe wird vermieden, dass sich eine Flotatschicht am Beckenrand oder am Boden des Beckens ablagert und eine nachfolgende Messung beeinträchtigt.

Nachfolgend wird die Erfindung anhand von in Figuren dargestellten Ausführungsbeispielen näher erläutert. Es zeigen:

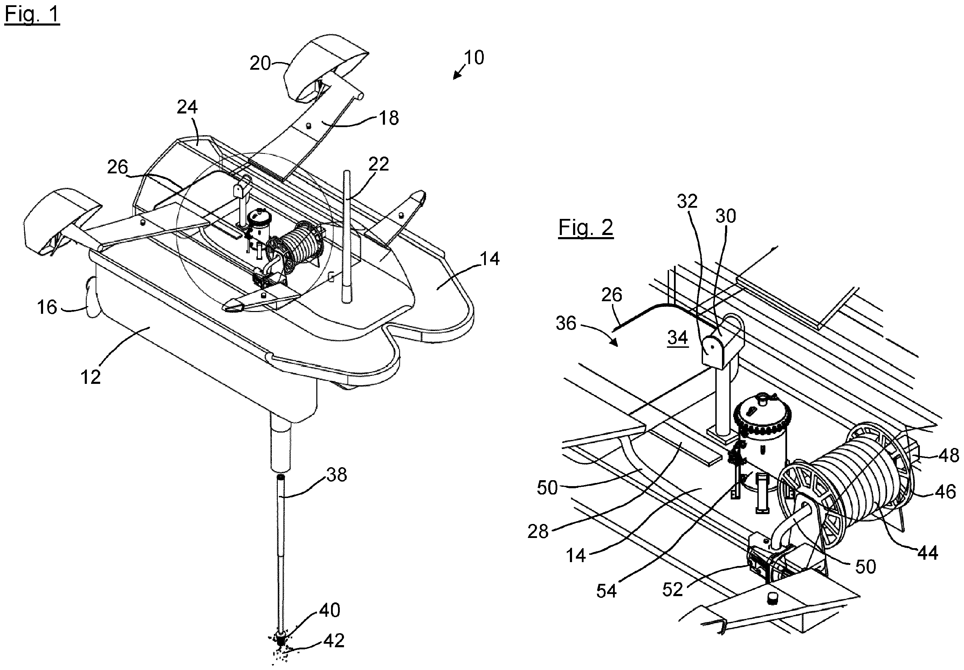

- Fig. 1: ein Wasserfahrzeug in einer perspektivischen Darstellung,
- Fig. 2: eine vergrößerte Darstellung des in Fig. 1 mit G bezeichneten Bereichs,

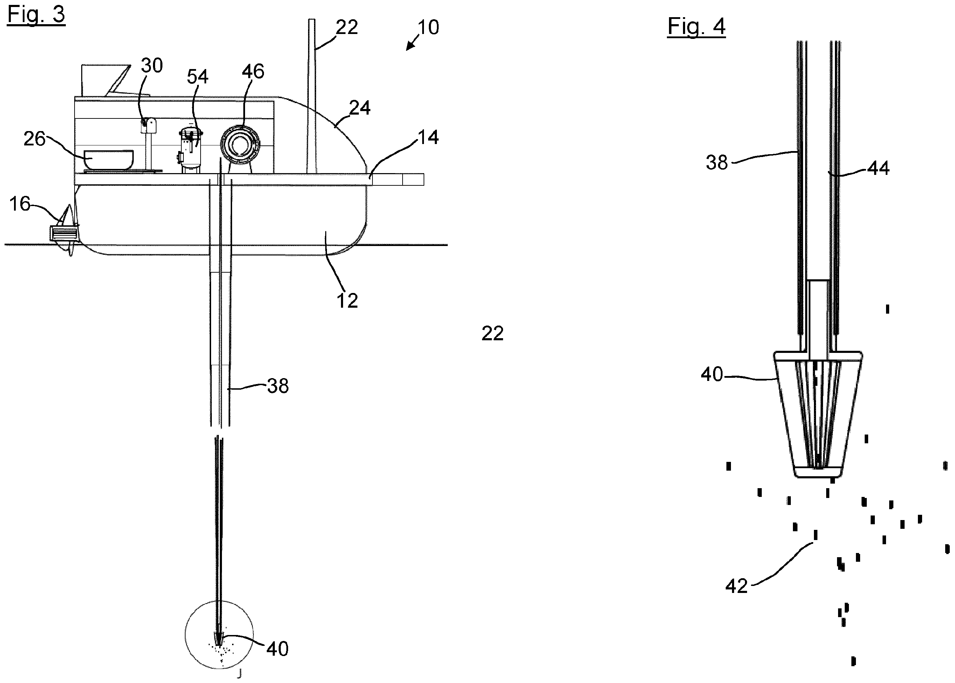

- Fig. 3: eine Schnittdarstellung des Wasserfahrzeugs aus Fig. 1 entlang einer Mittellängsebene,
- Fig. 4: eine vergrößerte Darstellung des in Fig. 3 mit J bezeichneten Bereichs,

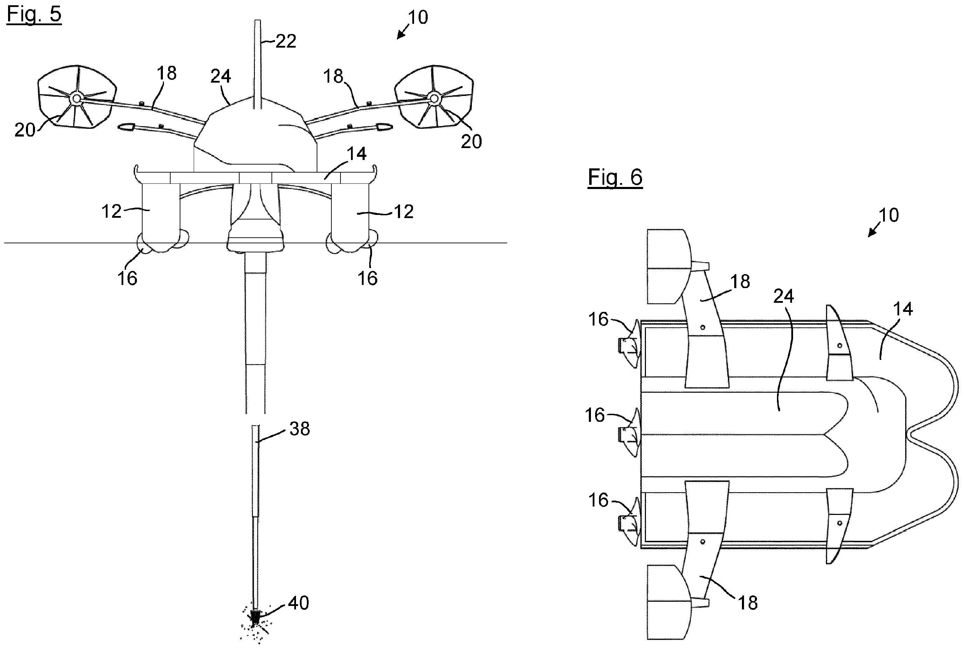

- Fig. 5: eine Ansicht des Wasserfahrzeugs aus Fig. 1 von vorn, und
- Fig. 6: eine Ansicht des Wasserfahrzeugs aus Fig. 1 von oben.

Es werden in allen Figuren dieselben Bezugszeichen verwendet. Das in Gänze oder in Teilen in allen Figuren gezeigte Wasserfahrzeug 10 ist ein Katamaran mit zwei schlanken Rümpfen 12, die über ein Tragdeck 14 miteinander verbunden sind. Es hat einen Fahrantrieb, der drei im Wasser befindliche Propeller 16 sowie zwei an seitlichen Auslegern 18 angeordnete Luftschrauben 20 umfasst. Mit diesem Fahrantrieb kann das Wasserfahrzeug 10 zugleich gesteuert werden. Außerdem hat das Wasserfahrzeug 10 ein Navigationssystem mit einer GPS-Antenne 22 und eine nicht gezeigte Steuerung, mit der es autonom fahren und navigieren kann.

Auf dem Tragdeck 14, unterhalb einer Abdeckung 24, ist ein Becken 26 angeordnet. Das Becken 26 hat die Form einer relativ flachen Schale, mit einem flachen Boden, einer rechteckigen Grundform und einer Höhe, die im Beispiel nur etwa 10 cm beträgt. Länge und Breite des Wasserfahrzeugs 10 betragen jeweils etwa 1 m. Das Becken 26 ist an seiner hinteren Längskante schwenkbar befestigt und kann mit einer Kippeinrichtung 28 nach hinten ausgekippt werden, wodurch der gesamte Inhalt des Beckens 26 über das Heck des Wasserfahrzeugs 10 in das Gewässer zurückgeführt wird.

Ebenfalls auf dem Tragdeck 14, seitlich und oberhalb des Beckens 26, befindet sich eine Kamera 30, die von einem Kamerahalter 32 gehalten und so ausgerichtet ist, dass sie ein farbiges Bild der Wasseroberfläche 34 einer von dem Becken 26 aufgenommenen Wasserprobe 36 erfasst.

Um eine Wasserprobe 36 aus einem Gewässer, auf dem das Wasserfahrzeug 10 fährt, zu entnehmen, hat das Wasserfahrzeug 10 ein Teleskoprohr 38, dass an dem Tragdeck 14 befestigt ist, so dass es zwischen den beiden Rümpfen 12 senkrecht nach unten weist. Am unteren Ende des Teleskoprohrs 38 befindet sich ein Ansaugstutzen 40, der durch Ein- und Ausfahren des Teleskoprohrs 38 in einer für die Probenentnahme gewünschten Wassertiefe von bis zu 6 m angeordnet werden kann. In einigen Figuren ist eine Mikroplastikwolke 42 in der Nähe des Ansaugstutzens erkennbar.

Im Inneren des Teleskoprohrs 38 ist ein Schlauch 44 geführt, dessen eines Ende mit dem Ansaugstutzen 40 verbunden ist. Der Schlauch 44 verlässt das Teleskoprohr 38 an dessen oberem Ende, wo er auf eine Schlauchtrommel 46 aufgerollt ist. Die Schlauchtrommel 46 weist einen Antrieb 48 auf, so dass der Schlauch 44 während des Einfahrens des Teleskoprohrs 38 aufgerollt werden kann. Um das Teleskoprohr 38 auszufahren, kann der Schlauch 44 entsprechend abgerollt werden. Das andere Ende des Schlauchs 44 ist mit einer Rohrleitung 50 verbunden, die in das Becken 26 führt und in der eine Pumpe 52 angeordnet ist. Zum Entnehmen einer Wasserprobe 36 wird das Wasser mit der Pumpe 52 vom Ansaugstutzen 40 über den Schlauch 44 und die Rohrleitung 50 in das Becken 26 transportiert.

Das Wasserfahrzeug 10 weist eine Einrichtung zum Erzeugen von Druckwasser mit einem Reaktorbehälter 54 auf. Die Einrichtung zum Erzeugen von Druckwasser umfasst einen Kompressor und eine Pumpe (beides nicht in den Figuren dargestellt), mit denen dem Reaktorbehälter 54 Luft und Wasser unter erhöhtem Druck zugeführt werden können. Der Reaktorbehälter 54 ist über eine nicht gezeigte Druckwasserleitung mit einem ebenfalls nicht gezeigten Entspannungsventil verbunden, das am Boden des Beckens 26 angeordnet ist.

Somit können durch Auströmenlassen von Druckwasser aus dem Reaktorbehälter 54 über das Entspannungsventil Mikroblasen erzeugt werden, die durch die Wasserprobe 36 in dem Becken 26 an die Wasseroberfläche 34 oberhalb des Entspannungsventils aufsteigen. Dabei lagern sich gegebenenfalls insbesondere Mikroplastikpartikel an die Mikroblasen an, und es bildet sich an der Wasseroberfläche 34 eine Flotatschicht, die im von der Kamera 30 erfassten Bild sichtbar ist. Auf Grundlage des erfassten Bilds wird ein Kennwert ermittelt, der die Partikelkonzentration in dem Gewässer an der jeweiligen Probenentnahmestelle charakterisiert.

### Liste der Bezugszeichen

- 10: Wasserfahrzeug
- 12: Rumpf
- 14: Tragdeck
- 16: Propeller
- 18: Ausleger
- 20: Luftschrauben
- 22: GPS-Antenne
- 24: Abdeckung
- 26: Becken
- 28: Kippeinrichtung
- 30: Kamera
- 32: Kamerahalter
- 34: Wasseroberfläche
- 36: Wasserprobe
- 38: Teleskoprohr
- 40: Ansaugstutzen
- 42: Mikroplastikwolke
- 44: Schlauch
- 46: Schlauchtrommel
- 48: Antrieb
- 50: Rohrleitung
- 52: Pumpe
- 54: Reaktorbehälter

## Patentansprüche

1. Verfahren zur Lokalisierung von Bereichen eines Gewässers, die eine erhöhte Partikelkonzentration aufweisen, mit den folgenden Schritten:
• Ansteuern einer definierten Position in dem Gewässer mit einem Wasserfahrzeug (10), das eine Einrichtung zum Bereitstellen von Druckwasser, eine mit der Einrichtung zum Bereitstellen von Druckwasser verbundene Druckwasserleitung mit einem Entspannungsventil und eine Kamera (30) aufweist,
• Ausströmenlassen von Druckwasser durch das Entspannungsventil, während das Entspannungsventil unterhalb und in einem definierten Abstand von einer Wasseroberfläche (34) angeordnet ist, so dass eine Vielzahl von Mikroblasen entstehen und an die Wasseroberfläche (34) aufsteigen,
• Erfassen eines Bilds der Wasseroberfläche (34) mit der Kamera (30),
• Ermitteln eines Kennwerts für die Partikelkonzentration auf Grundlage des mit der Kamera (30) erfassten Bilds.

2. Verfahren nach Anspruch 1, **dadurch gekennzeichnet, dass** der definierte Abstand 50 cm oder weniger beträgt.

3. Verfahren nach Anspruch 1 oder 2, **gekennzeichnet durch** den weiteren Schritt:
• Transportieren einer Wasserprobe (36) aus einer vorgegebenen Wassertiefe des Gewässers in einen Bereich oberhalb des Entspannungsventils.

4. Verfahren nach einem der Ansprüche 1 bis 3, **dadurch gekennzeichnet, dass** das Wasserfahrzeug (10) ein Becken (26) aufweist, in dem das Entspannungsventil angeordnet ist, wobei die Wasserprobe (36) in das Becken (26) transportiert wird.

5. Verfahren nach einem der Ansprüche 1 bis 4, **dadurch gekennzeichnet, dass** nach dem Ermitteln des Kennwerts der Kennwert gemeinsam mit der definierten Position gespeichert wird, insbesondere gemeinsam mit der Wassertiefe, aus der die Wasserprobe (36) stammt.

6. Verfahren nach einem der Ansprüche 1 bis 5, **dadurch gekennzeichnet, dass** nach dem Erfassen des Bilds das den Mikroblasen ausgesetzte Wasser einschließlich einer an der Wasseroberfläche (34) gebildeten Flotatschicht in dem Gewässer verbleibt bzw. aus dem Becken (26) in das Gewässer zurückgeführt wird.

7. Verfahren nach einem der Ansprüche 1 bis 6, **dadurch gekennzeichnet, dass** das Wasserfahrzeug (10) einen Fahrantrieb und ein Navigationssystem aufweist, autonom eine Reihe von vorgegebenen Positionen in dem Gewässer ansteuert und an jeder vorgegebenen Position mindestens einen Kennwert für die Partikelkonzentration ermittelt.

8. Verfahren nach einem der Ansprüche 1 bis 7, **dadurch gekennzeichnet, dass** mit der Kamera (30) ein Farbbild erfasst wird.

9. Verfahren nach einem der Ansprüche 1 bis 8, **dadurch gekennzeichnet, dass** nach der Lokalisierung eines Bereichs eines Gewässers, der eine erhöhte Partikelkonzentration aufweist, die folgenden weiteren Schritte ausgeführt werden:
• Bewegen einer schwimmende Mikroflotationsanlage zu dem Bereich und
• Betreiben der schwimmenden Mikroflotationsanlage zur Abscheidung und Entsorgung der Partikel.

10. Wasserfahrzeug (10) zur Lokalisierung von Bereichen eines Gewässers, die eine erhöhte Partikelkonzentration aufweisen, wobei das Wasserfahrzeug (10) folgendes aufweist:
• eine Einrichtung zum Bereitstellen von Druckwasser,
• eine mit der Einrichtung zum Bereitstellen von Druckwasser verbundene Druckwasserleitung mit einem Entspannungsventil, das in einer definierten Wassertiefe unterhalb einer Wasseroberfläche (34) angeordnet werden kann,
• eine Kamera (32) und
• einer Steuerung, die dazu ausgebildet ist,
• die Einrichtung zum Bereitstellen von Druckwasser und/oder ein zugeordnetes Steuerventil so anzusteuern, dass Druckwasser durch das Entspannungsventil ausströmt, während das Entspannungsventil in einer definierten Wassertiefe unterhalb einer Wasseroberfläche (34) angeordnet ist, so dass eine Vielzahl von Mikroblasen entstehen und an die Wasseroberfläche (34) aufsteigen, und
• die Kamera (30) so anzusteuern, dass sie ein Bild von der Wasseroberfläche (34) oberhalb des Entspannungsventils erfasst,
• wobei eine Auswerteeinrichtung vorgesehen ist, die dazu ausgebildet ist, auf Grundlage des mit der Kamera (30) erfassten Bilds einen Kennwert für die Partikelkonzentration zu ermitteln.

11. Wasserfahrzeug (10) nach Anspruch 10, **gekennzeichnet durch** eine Transporteinrichtung, mit der eine Wasserprobe (36) aus einer vorgebbaren Wassertiefe in einen Bereich oberhalb des Entspannungsventils transportiert werden kann.

12. Wasserfahrzeug (10) nach Anspruch 11, **dadurch gekennzeichnet, dass** die Transporteinrichtung ein Teleskoprohr (38) aufweist, an dessen unterem Ende eine Ansaugöffnung angeordnet ist.

13. Wasserfahrzeug (10) nach Anspruch 12, **dadurch gekennzeichnet, dass** in dem Teleskoprohr (38) ein Schlauch (44) geführt ist, der zu der Ansaugöffnung führt, wobei am oberen Ende des Teleskoprohrs (38) eine Aufrolleinrichtung für den Schlauch (44) angeordnet ist.

14. Wasserfahrzeug (10) nach einem der Ansprüche 10 bis 13, **dadurch gekennzeichnet, dass** das Wasserfahrzeug (10) ein Becken (26) aufweist, in dem das Entspannungsventil angeordnet ist.

15. Wasserfahrzeug (10) nach Anspruch 14, **dadurch gekennzeichnet, dass** das Wasserfahrzeug (10) eine Kippeinrichtung (28) aufweist, mit der das Becken (26) gekippt und eine in dem Becken (26) aufgenommene Wasserprobe (36) einschließlich einer an der Wasseroberfläche (34) ausgebildeten Flotatschicht ausgekippt werden kann.
